# EUROPEAN PATENT SPECIFICATION

(11) **EP 2 679 795 B1**
(45) Date of publication and mention of the grant of the patent: **16.08.2017**
(21) Application number: 12749524.0
(22) Date of filing: 01.02.2012
(51) Int. Cl.: F02M 21/02, F02B 43/00, F02B 43/10, F02M 21/06, F02D 19/10

(54) **GAS FUEL SUPPLY DEVICE, HIGH-PRESSURE GAS INJECTION DIESEL ENGINE, AND LIQUEFIED GAS FUEL SUPPLY METHOD FOR HIGH-PRESSURE GAS INJECTION DIESEL ENGINE**
GASBRENNSTOFFZUFUHRVORRICHTUNG, HOCHDRUCKGASEINSPRITZ-DIESELMOTOR UND VERFAHREN ZUM ZUFÜHREN EINES FLÜSSIGGASBRENNSTOFFS FÜR EINEN HOCHDRUCKGASEINSPRITZ-DIESELMOTOR
DISPOSITIF D'ALIMENTATION EN CARBURANT GAZEUX, MOTEUR DIESEL À INJECTION DE GAZ SOUS HAUTE PRESSION ET PROCÉDÉ POUR FOURNIR DU CARBURANT FORMÉ DE GAZ LIQUÉFIÉ POUR MOTEUR DIESEL À INJECTION DE GAZ À HAUTE PRESSION

(30) Priority: 25.02.2011 JP 2011040586
(43) Date of publication of application: 01.01.2014
(73) Proprietor: Mitsubishi Heavy Industries, Ltd., Tokyo 108-8215 (JP)
(72) Inventor: OKA, Masaru, Tokyo 108-8215 (JP); TANAKA, Yoshitomo, Tokyo 108-8215 (JP)
(74) Representative: Henkel, Breuer & Partner
(86) International application number: PCT/JP2012/052294
(87) International publication number: WO 2012/114839

(56) References cited:
- EP-A1- 0 069 717
- EP-A1- 0 609 473
- WO-A1-01/25649
- WO-A2-94/23201
- JP-A- 2005 504 927
- JP-A- 2006 283 736
- JP-A- 2009 204 026
- JP-A- 2010 174 748
- US-A1- 2003 051 486
- US-A1- 2008 209 916

## Description

### {Technical Field}

The present invention relates to a device for supplying gas fuel such as natural gas, which is used, for example, in marine main engine or generator drive engine applications, a high-pressure gas injection diesel engine, and a liquefied gas fuel supply method for the high-pressure gas injection diesel engine.

### {Background Art}

In the past, there have been many diesel engines which operate on natural gas resulting from vaporization of liquefied natural gas (hereinafter referred to as "LNG") as a fuel. In recent years, as a measure for improving environmental emission performance of the existing oil-fired low-speed diesel main engines, a high-pressure gas injection type low-speed two-cycle diesel engine (hereinafter referred to as "SSD-GI") has been drawing attention. This SSD-GI is the most thermally efficient, high-power engine of the diesel engines, which is at the same time an engine capable of delivering power at a low speed, so that it can be directly connected to and drive a propeller.

However, unlike the proven oil-fired diesel engines, in a case of the SSD-GI using natural gas as a fuel, a high-pressure injection technology for supplying natural gas into a combustion chamber at a high pressure (about 150 to 300 bar) has not matured, and there is still no established technology related to the LNG fuel supply.

In the past when the SSD-GI was a prospective main engine for LNG carriers, a method for using boil off gas (hereinafter referred to as "BOG") as an engine fuel had been considered, in which the BOG at near-atmospheric pressure is compressed by a multi-stage gas compressor, and then the BOG is cooled during the compression process or after the compression. However, the method of compressing and cooling BOG had disadvantages in that it required large-scale facilities and also had high power consumption.

Meanwhile, nowadays, the realization of a BOG reliquefaction system on board LNG carriers has made it possible to liquefy and store BOG without turning it into a fuel. Thus, although in the conventional LNG carriers, efforts have been put into the method for turning BOG into a fuel with a view of efficient use of BOG, in this regard, there are now fewer obstacles to using LNG as a main fuel for the main engine. In addition, when LNG is used as a fuel in ships other than the LNG carriers, the need for BOG treatment is eliminated by using a pressure-type LNG tank.

Against this background, in the recent ships, attention has been focused on the use of LNG, which has favorable environmental emission characteristics, as a fuel for the main engine and the like, and various research and development on methods for utilizing LNG, etc. are gaining momentum.

Now, a possible method for supplying a fuel by high-pressure injection of natural gas is to heat and vaporize LNG after pressurizing it to a high pressure. Such pressurization of LNG to a high pressure is commonly achieved by pressurization using a reciprocating pump. With a cycle speed of about 300 rpm, this reciprocating pump has a considerably low speed as compared with 1800 to 3600 rpm of rotational speed of a common electric motor. For this reason, in a case of driving the reciprocating pump by the electric motor, a mechanism for reducing the rotational speed of the electric motor to the cycle speed of the reciprocating pump is required.

Gear-type and pulley-type speed reduction mechanisms are known as speed reduction mechanisms commonly used in the reciprocating pump operation. The gear-type speed reduction mechanism is a speed reduction mechanism combining multiple gears with different numbers of teeth, while the pulley-type speed reduction mechanism is a structure in which large and small wheels connected through a V-belt are rotated.

As disclosed, for example, in JP2009-204026A, it is a common practice in a liquefied gas regasification plant that pressure of liquefied gas which is extracted from a storage tank is pressurized in a liquid state to a high pressure by a pump.

US2003/051486A1 discloses a gas fuel supply device and method for pumping a cryogenic fluid, which can be used as a fuel for an internal combustion engine, from a tank to the internal combustion engine. The gas fuel supply device has a heater for heating the compressed fluid upstream of the combustion engine and downstream of a reciprocating piston pump. The reciprocating piston pump can be operated by a linear hydraulic motor, the speed of which can be controlled by a controller for the purpose of controlling the flow rate through the apparatus.

### {Summary of Invention}

### {Technical Problem}

As described above, although LNG has been drawing increasing attention as a fuel for the main engine in the ships of recent years, the high-pressure gas supply technology for injecting natural gas into the combustion chamber at a high pressure is not yet established. Besides, high-pressure injection of natural gas as an engine fuel is considered to require pressurization of LNG to a high pressure by the reciprocating pump, and the following problems with drive control of the reciprocating pump are pointed out. That is, if such an operation method is adopted as uses the electric motor as a drive source of the reciprocating pump and reduces the rotational speed of the electric motor to the cycle speed of the reciprocating pump through the interposition of the speed reduction mechanism, the following problems with the speed reduction mechanism and the electric motor will arise.

The first problem is related to a mechanical speed reduction mechanism required for driving the reciprocating pump by the electric motor.

To be more specific, in the gear-type speed reduction mechanism, damage to a tooth surface or a dedendum of a gear due to torque fluctuations on the reciprocating pump side is expected. Thus, in view of durability for a long-term continuous operation, considerations need to be given to a coupling such as using an elastic coupling or an inertia wheel for absorbing the torque fluctuations.

On the other hand, the pulley-type speed reduction mechanism has an advantage of being capable of mitigating the torque fluctuations characteristic of piston pumps by slip of the belt. However, as the belt is a consumable which requires replacement at short intervals, the pulley type is not suitable for a long-term continuous duty. In addition, due to concerns about generation of sparks at an exposed high-speed contact part, installation of the pulley-type speed reduction mechanism in a gas hazardous area is not recommended for safety reasons.

The second problem is related to the electric motor for driving the reciprocating pump.

To be more specific, in order to reduce the rotational speed of the electric motor to the cycle speed of the reciprocating pump by the speed reduction mechanism, whichever of the gear type and the pulley type described above is adopted, the electric motor requires a frequency control mechanism (inverter). However, the frequency control mechanism of the electric motor has poor accuracy at low frequencies, which becomes a disadvantage in a case where the control range is wide and high-accuracy control is required even in a considerably low-speed rotation region.

Further, in a case where electrical devices including the electric motor are installed in the gas hazardous area, selection of available devices is restricted. Accordingly, there are many restrictions on installation of the electric motor-driven reciprocating pump in the gas hazardous area.

The present invention has been made in order to solve the above problems, and an object thereof is to provide, in the field of the high-pressure injection technology applied to a high-pressure gas injection diesel engine, such as a high-pressure gas injection type low-speed two-cycle diesel engine, which supplies fuel gas (e.g., natural gas) into a combustion chamber at a high pressure, a gas fuel supply device in which liquefied gas (e.g., LNG) as a fuel is pressurized to a high pressure by using a reciprocating pump which can be easily installed in a gas hazardous area, a high-pressure gas injection diesel engine equipped with the gas fuel supply device, and a liquefied gas fuel supply method for the high-pressure gas injection diesel engine.

### {Solution to Problem}

In order to achieve the above object, the present invention provides a gas fuel supply device with the features of claim 1 and a liquefied gas fuel supply method with the features of claim 5.

According to the present invention, the gas fuel supply device includes: a reciprocating pump which is driven by a hydraulic motor to pressurize introduced liquefied gas to a desired pressure, and discharges the pressurized liquefied gas; a hydraulic pump unit which supplies driving hydraulic pressure from an electric motor-driven variable-capacity hydraulic pump to the hydraulic motor; a heating device which heats and vaporizes the pressurized liquefied gas supplied from the reciprocating pump; a control part which regulates rotational speed of the hydraulic motor so as to maintain constant gas fuel outlet pressure of the heating device; and an engine inlet gas pressure-reducing valve which regulates the pressure of the gas fuel to be injected into the combustion chamber. Thus, control of the rotational speed of the hydraulic motor driving the reciprocating pump is achieved by capacity control (oil quantity control) of the hydraulic pump, and thereby the need for the mechanical speed reduction mechanism or rotational frequency control of the electric motor is eliminated.

In addition, the reciprocating pump which is driven by the hydraulic motor and the hydraulic pump unit which supplies hydraulic pressure to the hydraulic motor are connected with each other through a hydraulic pipe and separately installed. This facilitates installation of the reciprocating pump, which has no electrical device or speed reduction mechanism, in a gas hazardous area.

In a gas fuel supply device of a first aspect of the present invention, the control part regulates the rotational speed of the hydraulic motor through variable capacity control of the hydraulic pump, thereby maintaining the constant gas fuel outlet pressure. This allows the rotational frequency of the hydraulic motor to be controlled with high accuracy over a wide range from a low rotational frequency region to a high rotational frequency region. Accordingly, the liquefied gas flow supplied from the reciprocating pump to the heating device can be controlled with high accuracy, so that the gas fuel outlet pressure, which is the pressure of the gas fuel vaporizing and flowing out from the heating device, can also be controlled with high accuracy.

The gas fuel supply device of the present invention is provided with a recirculation line including a flow regulating valve which branches off the liquefied gas flow, which has been pressurized by the reciprocating pump, from an upstream side of the heating device into a suction drum, and a recirculation flow introduced into the recirculation line is regulated by the flow regulating valve which operates on the basis of a control signal from the control part. Thus, in a case of a low-speed region where the rotational speed of the hydraulic motor cannot be controlled or when the liquefied gas flow should be throttled in an emergency, these situations can be handled by controlling the recirculation flow through the recirculation line by regulation of an opening degree of the flow regulating valve.

A gas fuel supply device of the present invention includes a vacuum prevention line which branches off from a hydraulic pressure supply line connecting the hydraulic pump unit and the hydraulic motor, and is connected to a low-pressure line, and which is provided with a check valve for blocking a hydraulic pressure flow in a direction from the hydraulic pressure supply line toward the low-pressure line. Thus, at an emergency stop, etc. of a hydraulic system, the hydraulic motor can be prevented from creating vacuum inside thereof by sucking up the hydraulic oil from the low-pressure line.

The gas fuel supply device of the present invention includes a plurality of gas fuel supply systems each including the reciprocating pump, the hydraulic pump unit, and the heating device, and the hydraulic systems of the respective gas fuel supply systems are connected with each other in an interchangeable manner. Thereby, the redundancy of the hydraulic system can be improved.

In a gas fuel supply device of a further aspect of the present invention, the engine inlet gas pressure-reducing valve realizes high-pressure supply of injecting the gas fuel into the combustion chamber of the high-pressure gas injection diesel engine (hereinafter referred to as "high-pressure mode"), and low-pressure supply of supplying the gas fuel as a fuel for a gas-spark-type Otto cycle engine (hereinafter referred to as "low-pressure mode"). By installing the device, for example, in a power generating engine which provides on-board power, low-pressure and low-flow fuel gas can be supplied in the low-pressure mode.

A high-pressure gas injection diesel engine according to the present invention operates on gas as a fuel which is obtained by vaporizing liquefied gas, and is equipped with the gas fuel supply device according to the invention.

According to the present invention, the high-pressure gas injection diesel engine operates on gas as a fuel which is obtained by vaporizing liquefied gas and is equipped with the gas fuel supply device according to any one of claims 1 to 6. Thus, control of the rotational speed of the hydraulic motor driving the reciprocating pump is achieved by capacity control of the hydraulic pump. Thereby, the need for the speed reduction mechanism or rotational frequency control of the electric motor is eliminated, and installation of the reciprocating pump in the gas hazardous area is facilitated.

According to the present invention, the liquefied gas fuel supply method for a high-pressure gas injection diesel engine includes the steps of: introducing and pressurizing the liquefied gas to a desired discharge pressure by a reciprocating pump, which is driven by a hydraulic motor operating on hydraulic pressure supplied from an electric motor-driven variable-capacity hydraulic pump; and heating the pressurized liquefied gas supplied from the reciprocating pump and thereby generating a gas fuel. In the liquefied gas supply method, pressure of the gas fuel to be injected into the combustion chamber is regulated through operation of an engine inlet gas pressure-reducing valve provided in the vicinity of an inlet of the combustion chamber, while the gas fuel outlet pressure of the heating device is maintained constant through regulation of rotational speed of the hydraulic motor. Thus, the need for the speed reduction mechanism or rotational frequency control of the electric motor is eliminated, and installation of the reciprocating pump in the gas hazardous area is facilitated.

### {Advantageous Effects of Invention}

According to the above-described present invention, in the high-pressure gas injection diesel engine, such as the high-pressure gas injection type low-speed two-cycle diesel engine, which operates by supplying fuel gas at a high pressure into the combustion chamber, liquefied gas as a fuel is pressurized to a high pressure by using the hydraulic motor-driven reciprocating pump. Thus, installation of the reciprocating pump in the gas hazardous area is facilitated.

In addition, since there is no pulley-type or gear-type speed reduction mechanism, the need for belt replacement or maintenance work for gear surface wear is eliminated.

Moreover, since the device requires no rotational frequency control of the electric motor, the rotational frequency of the hydraulic motor driving the reciprocating pump can be controlled with high accuracy over a wide range from a low rotational frequency region to a high rotational frequency region. Thereby, the flow can be controlled with high accuracy over a wide range.

### {Brief Description of Drawings}

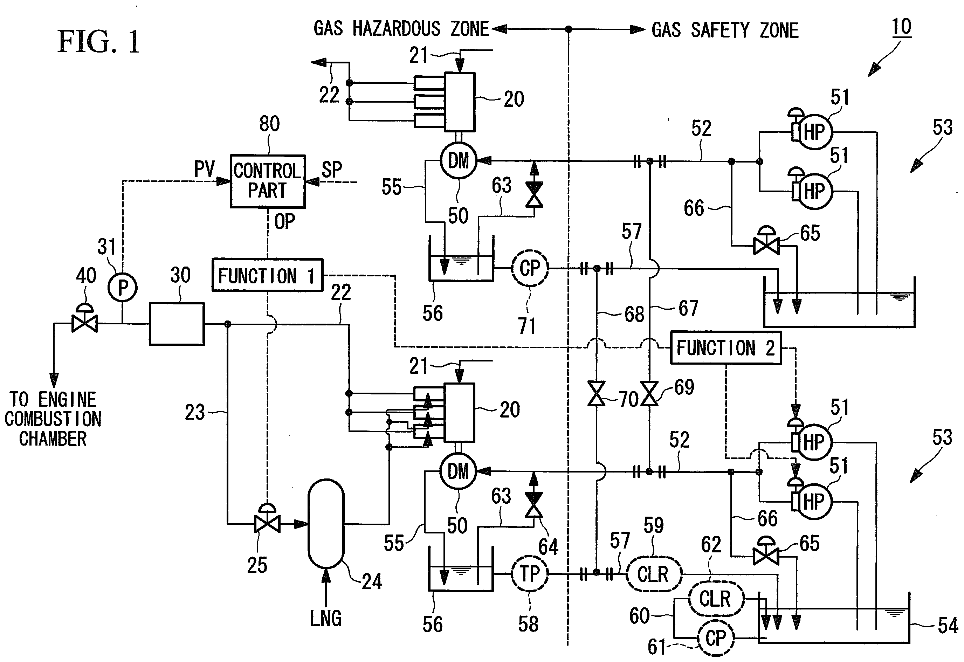

{Fig. 1}
   Fig. 1 is a system diagram showing one embodiment of a gas fuel supply device according to the present invention.
{Fig. 2}
   Fig. 2 is an explanatory chart of "Function 1" which plots an operating point (OP) on the abscissa and a pump load of a reciprocating pump and an opening degree of a recirculation control valve (RCV) on the ordinate.
{Fig. 3}
   Fig. 3 is an explanatory chart of "Function 2" which plots the pump load of the reciprocating pump on the abscissa and a swashplate angle of the hydraulic pump on the ordinate.

### {Description of Embodiments}

Hereinafter, one embodiment of a gas fuel supply device according to the present invention will be described on the basis of the drawings.

A gas fuel supply device 10 of the embodiment shown in Fig. 1 is a device which is equipped with a high-pressure mode for supplying fuel gas, which is obtained by vaporizing liquefied gas, by injection into a combustion chamber of a high-pressure gas injection diesel engine. Examples of the high-pressure gas injection diesel engine in this embodiment include a high-pressure gas injection type low-speed two-cycle diesel engine (hereinafter referred to as "SSD-GI").

In the following description, liquefied natural gas (hereinafter referred to as "LNG") is used as liquefied gas, and natural gas resulting from vaporization of LNG is used as fuel gas. However, the device of the embodiment can also be applied to an engine using liquefied gas such as liquefied petroleum gas (LPG) as a fuel.

The gas fuel supply device 10 includes: an LNG fuel system which supplies natural gas, which is obtained by vaporizing LNG having been pressurized by the reciprocating pump 20, by injection into the combustion chamber of the high-pressure gas injection engine; a hydraulic system which supplies hydraulic pressure to a hydraulic motor 50 which drives the reciprocating pump 20; and a control part 80 which controls the hydraulic motor 50, etc. In the example configuration shown in the figure, two sets of the LNG fuel system and the hydraulic system are installed, but the present invention is not limited to this configuration.

The LNG fuel system includes the reciprocating pump 20 driven by the hydraulic motor 50. This reciprocating pump 20 is a pump which introduces LNG at near-atmospheric pressure and pressurizes the LNG to a desired pressure before discharging it. An LNG introduction pipe 21 connected to a suction side of the reciprocating pump 20 is connected to an LNG tank, etc. (not shown).

An LNG supply pipe 22 connected to a discharge side of the reciprocating pump 20 includes a heating device 30 and an engine inlet gas pressure-reducing valve (hereinafter referred to as "gas pressure-reducing valve") 40 disposed in this order from a pump side.

The heating device 30 is a device which heats and vaporizes the pressurized LNG supplied from the reciprocating pump 20. Specifically, the high-pressure LNG having flowed into the heating device 30 is heated inside the device, so that it flows out as natural gas resulting from vaporization of the LNG.

A pressure sensor 31 is provided near an outlet of the heating device 30, and a natural gas output pressure PV detected by this pressure sensor 31 is input to the control part 80 as a gas fuel outlet pressure.

The control part 80 regulates rotational speed of the hydraulic motor 50, to be described later, in order to maintain the natural gas outlet pressure PV to a predetermined constant pressure value.

The natural gas supplied from the heating device 30 is regulated to a desired pressure by the gas pressure-reducing valve 40, and thereafter supplied by injection into the high-pressure combustion chamber. That is, since the natural gas is injected into the combustion chamber, which is compressed by a piston to a high pressure, it is necessary to set the natural gas injection (supply) pressure regulated by the gas pressure-reducing valve 40 to a higher pressure than the pressure inside the combustion chamber. Such an operation mode for injecting the natural gas into the combustion chamber at a high pressure is called "high-pressure mode". In the case of the SSD-GI, the natural gas injection pressure in the high-pressure mode is generally 150 to 300 bar.

In addition to the aforementioned "high-pressure mode", the gas pressure-reducing valve 40 is equipped with a "low-pressure mode" for supplying the natural gas being gas fuel to a gas-spark-type Otto cycle engine as a fuel. This "low-pressure mode" is used, for example, when supplying a gas fuel to a power generating engine, etc. which provides on-board power, and has a lower supply pressure compared with that of the "high-pressure mode".

The LNG supply pipe 22 includes a recirculation line 23 branching off from an upstream side of the heating device 30. This recirculation line 23 is a piping system for branching off the LNG flow, which has been pressurized by the reciprocating pump 20, from the upstream side of the heating device 30 into the suction drum 24, and is provided with a recirculation control valve 25 (flow regulating valve) on the upstream side of the suction drum 24.

By providing this recirculation line 23, in a case of a low-speed region where the rotational speed of the hydraulic motor 50 cannot be controlled or when the LNG flow should be throttled in an emergency, these situations can be handled by controlling the LNG recirculation flow through the recirculation line 23 by regulation of the opening degree of the flow regulating valve 25.

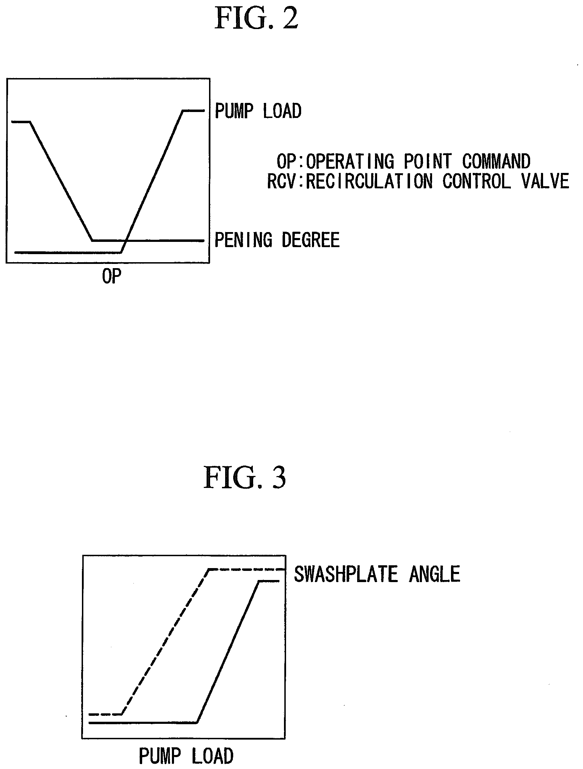

To be more specific, for example, as shown in the explanatory chart of Fig. 2, in the low-speed region where a pump load is small, the recirculation flow is secured by increasing the opening degree of the recirculation control valve 25. In other words, at an operating point OP where the pump load is small, a total flow of the LNG flowing through the reciprocating pump 20 is secured by increasing the recirculation flow. Thereby, the rotational frequency of the hydraulic motor 50 is maintained within a rotational frequency region where the hydraulic motor 50 can be controlled. In addition, in order to throttle the LNG flow in an emergency, the opening degree of the recirculation control valve 25 just has to be increased to increase the recirculation flow bypassing the heating device 30, and thereby to restrict a supply flow to the heating device 30. The explanatory chart of Fig. 2 corresponds to "Function 1" of Fig. 1.

The suction drum 24 is an LNG container for collecting the LNG, which has been branched off and introduced from the LNG supply pipe 22, and returning it to a recirculation suction part of the reciprocating pump 20. The LNG recirculation flow introduced into the recirculation line 23 is regulated by the recirculation control valve 25 which operates on the basis of the control signal for the operating point OP output from the control part 80. The control signal for the operating point OP is an opening degree signal determining the operating point, and is output by the control part 80 on the basis of a setting point SP given, for example, by an engine rotational frequency, and the natural gas outlet pressure PV detected by the pressure sensor 31.

The setting point SP in this case may be a variable, as the aforementioned engine rotational frequency, such that controllability of the gas pressure-reducing valve 40 is high with respect to the pressure value, or the setting point SP may be a fixed value.

The hydraulic system includes a variable-capacity hydraulic pump 51 driven by the electric motor (not shown), and also includes a hydraulic pump unit 53 which supplies hydraulic pressure from the hydraulic pump 51, through the hydraulic oil supply pipe (hydraulic pressure supply line) 52, to the hydraulic motor 50 which drives the reciprocating pump 20.

The hydraulic pump unit 53 shown in the figure is provided with two hydraulic pumps 51 which are electrically driven at a constant speed, and pressurizes hydraulic oil suctioned from a primary oil reservoir tank 54 to supply it to the hydraulic motor 50. The hydraulic pump 51 used here is a variable-capacity type such as a swashplate pump, and is a pump capable of regulating the hydraulic oil supply flow by regulation of the swashplate angle, etc., even while rotating at a constant speed.

The number of the hydraulic pump 51 of the hydraulic pump unit 53 is not limited to two.

The explanatory chart of Fig. 3 shows a control example in a case where two hydraulic pumps 51 of the swashplate type are used together, and it corresponds to "Function 2" of Fig. 1.

In a first control example, where the pump load of the reciprocating pump 20 is plotted on the abscissa, the swashplate angles of two hydraulic pumps 51 are controlled in a similar manner according to a change in the pump load, as indicated by the solid line in the figure. Thus, this is an example of operation control in which each of two hydraulic pumps 51 used together produces 50% of the required hydraulic pressure.

In a second control example, the swashplate angle of one of the hydraulic pumps is controlled to the angle indicated by the solid line, while the swashplate angle of the other is controlled to the angle indicated by the broken line. In this case of operation control, the swashplate angles of two hydraulic pumps 51 are set to different angles, and either of the hydraulic pumps supplies a larger part of the hydraulic pressure while the other compensates for the shortage.

The hydraulic oil having driven the hydraulic motor 50 passes through a hydraulic oil return pipe 55 and returns to an auxiliary oil reservoir tank 56. The auxiliary oil reservoir tank 56 shown in the figure has a separate structure from the primary oil reservoir tank 54, and both oil reservoir tanks 54 and 56 are connected with each other by a hydraulic oil connecting pipe 57.

When the hydraulic oil inside the auxiliary oil reservoir tank 56 cannot be returned by gravity, an oil transfer pump 58 provided in the hydraulic oil connecting pipe 57 is operated to return the hydraulic oil to the primary oil reservoir tank 54. At this time, the hydraulic oil to be returned to the primary oil reservoir tank 54 is cooled as it passes through an oil cooler 59 provided in the hydraulic oil connecting pipe 57, and temperature rise of the hydraulic oil is prevented.

The primary oil reservoir tank 54 is provided with a circulation passage 60 which circulates and cools as necessary the hydraulic oil inside thereof, and which is used in a case where the hydraulic oil cannot be returned by gravity from the auxiliary oil reservoir tank 56 or where the primary oil reservoir tank 54 and the auxiliary oil reservoir tank 56 have an integral structure. This circulation passage 60 is provided with an oil circulation pump 61 and an oil cooler 62. By internally circulating the hydraulic oil contained in the primary oil reservoir tank 54, the hydraulic oil can be cooled through the oil cooler 62, so that oil temperature rise is prevented.

The hydraulic system shown in Fig. 1 is provided with a vacuum prevention line 63 for protecting hydraulic devices. This vacuum prevention line 63 is a pipe which branches off from the hydraulic oil supply pipe 52 connecting the hydraulic pump unit 53 and the hydraulic motor 50, and is connected to the auxiliary oil reservoir tank 56 in the low-pressure line.

A check valve 64, which blocks the hydraulic pressure flow in a direction from the hydraulic oil supply pipe 52 toward the auxiliary oil reservoir tank 56, is provided at an appropriate place in the vacuum prevention line 63.

By providing this vacuum prevention line 63, at an emergency stop, etc. of the hydraulic system, even if the hydraulic pump 51 is stopped and the hydraulic pressure supply is stopped, the hydraulic motor 50 rotates by an inertial force. Thus, the hydraulic oil is sucked up from the low-pressure auxiliary oil reservoir tank 56, which prevents the hydraulic motor 50 from creating vacuum inside thereof. In other words, during normal operation, since the hydraulic pressure is supplied from the hydraulic pump 51, the check valve 64 is closed and no flow is generated from the hydraulic oil supply pipe 52 toward the auxiliary oil reservoir tank 56. However, at an emergency stop when the hydraulic pressure supply is stopped, negative pressure is generated inside the hydraulic oil supply pipe 52 and the hydraulic oil is sucked up from the auxiliary oil reservoir tank 56, so that the hydraulic motor 50 is prevented from creating vacuum inside thereof.

Further, a hydraulic oil recirculation line 66 including an emergency recirculation valve 65 is provided near an outlet of the hydraulic pump 51. This emergency recirculation valve 65 opens when the hydraulic oil supply pipe 52 reaches a high pressure equal to or higher than a predetermined value, and returns the hydraulic oil to the primary oil reservoir tank 54, thereby protecting the hydraulic pump 51, pipes on the downstream of it, and the hydraulic devices, etc.

In the example configuration shown in the figure, a plurality of gas fuel supply systems each constituted of the reciprocating pump 20, the hydraulic pump unit 53, and the heating unit 30 are provided, and the hydraulic systems of the respective gas fuel supply systems are connected with each other in an interchangeable manner. Specifically, the hydraulic oil systems have the respective hydraulic oil supply pipes 52 connected by a communication supply pipe 67, and the respective hydraulic oil connecting pipes 57 connected by a communication return pipe 68. An on-off valve 69 is provided in the communication supply pipe 67, and an on-off valve 70 is provided in the communication return pipe 68. The reference numeral 71 in the figure denotes a pump for circulating the hydraulic oil.

Thus, since the communication supply pipe 67 and the communication return pipe 68 allow the hydraulic pressure to be used in an interchangeable manner, even when one of the hydraulic systems should be damaged, operation is made possible by using the hydraulic pressure supplied from the other hydraulic system. Thus, the redundancy of the hydraulic system can be improved.

As described above, the gas fuel supply device 10 of the present embodiment is provided with: the reciprocating pump 20 which is driven by the hydraulic motor 50 and pressurizes the introduced LNG to a desired pressure before discharging it; the hydraulic pump unit 53 which supplies driving hydraulic pressure from the electric motor-driven variable-capacity hydraulic pump 51 to the hydraulic motor 50; the heating device 30 which heats and vaporizes the pressurized LNG supplied from the reciprocating pump 20; the control part 80 which regulates the rotational speed of the hydraulic motor 50 so as to maintain the constant natural gas outlet pressure PV of the heating device 30; and the gas pressure-reducing valve 40 which regulates the pressure of the natural gas to be injected into the combustion chamber. Thus, control of the rotational speed of the hydraulic motor 50 driving the reciprocating pump 20 can be achieved by capacity control (oil quantity control) of the hydraulic pump 51.

The control part 80 described above regulates the rotational speed of the hydraulic motor 50 through variable capacity control of the hydraulic pump 51 so as to control the natural gas outlet pressure PV to be constant. This allows the rotational frequency of the hydraulic motor 50 to be controlled with high accuracy over a wide range from a low rotational frequency region to a high rotational frequency region. Accordingly, the LNG flow supplied from the reciprocating pump 20 to the heating device 30 can also be controlled with high accuracy, so that the pressure of the natural gas vaporized and flowing out from the heating device 30, namely, the natural gas outlet pressure PV, can be controlled with high accuracy.

Thus, since there is a correlation among the rotational speed of the hydraulic motor 50, the flow through the reciprocating pump 20, and the natural gas outlet pressure PV, instead of the control by maintaining the constant natural gas outlet pressure PV, the rotational speed of the hydraulic motor 50 may serve as a controlled object.

An LNG fuel supply method for supplying an LNG fuel to the SSD-GI by using the above-described gas fuel supply device 10 includes the high-pressure mode for supplying natural gas by injection into the combustion chamber.

This high-pressure mode includes the steps of: introducing and pressurizing LNG to a desired discharge pressure by the reciprocating pump 20 which uses, as a drive source, the hydraulic motor 50 operating on the hydraulic pressure supplied from the electric motor-driven various-capacity hydraulic pump 51; and heating the pressurized LNG supplied from the reciprocating pump 20 and thereby generating natural gas by the heating device 30.

In the LNG fuel supply method of the present embodiment, the rotational speed of the hydraulic motor 50 is regulated. In other words, the pressure of the natural gas to be injected into the combustion chamber during normal operation is regulated through operation of the gas pressure-reducing valve 40 provided near the inlet of the combustion chamber, while the outlet pressure PV of the natural gas flowing out from the heating device 30 is maintained constant through regulation of the LNG flow supplied from the reciprocating pump 20 to the heating device 30.

By adopting this LNG fuel supply method, the need for the mechanical speed reduction mechanism or rotational frequency control of the electric motor is eliminated in the operation of the reciprocating pump 20, and installation of the reciprocating pump in the gas hazardous area is facilitated. This is because the rotational speed of the hydraulic motor 50 can be regulated by the oil quantity supplied from the hydraulic pump 51.

In the specific example of Fig. 1, for example, an inside of a ship is divided into a gas hazardous zone and a gas safety zone by a bulkhead. Since the electric motor-driven hydraulic pump 51 can be installed on the gas safety zone side, a normal non-explosion-proof, constant-speed motor can be used as the electric motor for driving the hydraulic pump 51. Thus, freedom of choice of devices can be increased.

On the other hand, since the hydraulic motor 50 installed on the gas hazardous zone side has the structure that does not use electricity, there is no restriction on the installation.

That is, the reciprocating pump 20 which is driven by the hydraulic motor 50 and the hydraulic pump unit 53 which supplies hydraulic pressure to the hydraulic motor 50 can be connected with each other through the hydraulic oil supply pipe 52 and separately installed. This facilitates installation of the reciprocating pump 20, which has no electrical device or speed reduction mechanism, in the gas hazardous area.

In the high-pressure gas injection diesel engine, which is equipped with the above-described gas fuel supply device 10 and uses as a fuel the gas obtained by vaporizing liquefied gas such as LNG, the need for the speed reduction mechanism or rotational frequency control of the electric motor is eliminated, and installation of the reciprocating pump in the gas hazardous area is facilitated.

Thus, according to the present embodiment, in the high-pressure gas injection diesel engine, such as the SSD-GI, which operates by supplying fuel gas such as natural gas into the combustion chamber at a high pressure, since the liquefied gas as a fuel is pressurized to a high pressure by using the hydraulic motor-driven reciprocating pump 20, installation of the reciprocating pump 20 in the gas hazardous area is facilitated. In addition, since there is no mechanical speed reduction mechanism such as the pulley type or the gear type, the need for belt replacement or maintenance work for gear surface wear is eliminated.

Moreover, although the electric motor is used for the hydraulic pump 51, the device does not require rotational frequency control of the electric motor. Thus, the rotational frequency of the hydraulic motor 50 driving the reciprocating pump 20 can be controlled with high accuracy over a wide range from a low rotational frequency region to a high rotational frequency region, so that the flow can be controlled with high accuracy over a wide range.

It should be noted that the present invention is not limited to the above-described embodiment. The present invention is applicable, for example, to a generator drive engine at an LNG floating terminal or an onshore LNG, etc. other than marine propulsion main engines.

### {Reference Signs List}

10 gas fuel supply device
20 reciprocating pump
23 recirculation line
24 suction drum
25 recirculation control valve (flow regulating valve)
30 heating device
40 engine inlet gas pressure-reducing valve (gas pressure-reducing valve)
50 hydraulic motor
51 hydraulic pump
53 hydraulic pump unit
63 vacuum prevention line
64 check valve
67 communication supply pipe
68 communication return pipe
80 control part

## Claims

1. A gas fuel supply device (10) for supplying liquefied gas at a high pressure for injection of fuel gas into a combustion chamber of a high-pressure gas injection diesel engine, the gas fuel supply device (10) comprising:
***a plurality of gas fuel supply systems each comprising:***
a reciprocating pump (20) arranged to be driven by a hydraulic motor (50) to pressurize introduced liquefied gas to a desired pressure, and discharge the pressurized liquefied gas;
***a hydraulic system including*** a hydraulic pump unit (53) arranged to supply driving hydraulic pressure from an electric motor-driven variable-capacity hydraulic pump (51) to the hydraulic motor (50), ***and a vacuum prevention** line (63) which branches off **from a hydraulic** pressure supply line **(52) connecting the hydraulic pump unit (53) and the hydraulic motor (50), and which is connected to an auxiliary oil reservoir tank (56), wherein the vacuum prevention line (63) is provided with a check valve (64) for blocking a hydraulic pressure flow in a direction from the hydraulic pressure supply line (52) toward the auxiliary oil reservoir tank (56) ; and***
a heating device (30) arranged to heat and vaporize the pressurized liquefied gas supplied from the reciprocating pump (20);
a control part (80) arranged to regulate rotational speed of the hydraulic motor (50) using the gas fuel outlet pressure (PV) of the heating device (30) or the rotational speed of the hydraulic motor (50) as a controlled object;
an engine inlet gas pressure-reducing valve (40) arranged to regulate pressure of gas fuel to be injected into the combustion chamber; ***and***
a recirculation line (23) including a flow regulating valve (25) arranged to branch off the liquefied gas, which has been pressurized by the reciprocating pump (20), from an upstream side of the heating device (30) into a suction drum (24),
wherein the control part (80) is arranged to, in a low speed region where the pump load would otherwise be small, increase the opening degree of the flow regulating valve (25) to increase the recirculation flow through the recirculation line (23) to secure a total flow of the liquefied gas flow through the reciprocating pump (20) to maintain the rotational frequency of the hydraulic motor (50) within a rotational frequency region where the hydraulic motor (50) can be controlled, ***and***
***wherein hydraulic systems of the respective gas fuel supply systems are connected with each other in an interchangeable manner.***

2. The gas fuel supply device (10) according to claim 1, wherein
the control part (80) is arranged to regulate the rotational speed of the hydraulic motor (50) through variable capacity control of the hydraulic pump (51) so as to maintain the constant gas fuel outlet pressure (PV).

3. The gas fuel supply device (10) according to claim 1 ***or 2,*** wherein
the engine inlet gas pressure-reducing valve (40) is equipped with a high-pressure mode for injecting the gas fuel into the combustion chamber of the high-pressure gas injection diesel engine, and a low-pressure mode for supplying the gas fuel as a fuel for a gas-spark-type Otto cycle engine.

4. A high-pressure gas injection diesel engine arranged to operate on gas as a fuel obtained by vaporizing liquefied gas, and equipped with the gas fuel supply device (10) according to any one of claims 1 to ***3***.

5. A liquefied gas fuel supply method for supplying liquefied gas at a high pressure for injection of a gas fuel into a combustion chamber of a high-pressure gas injection diesel engine ***as defined in claim 4***, the liquefied gas fuel supply method comprising the steps of:
introducing and pressurizing the liquefied gas to a desired discharge pressure by a reciprocating pump (20) which is driven by a hydraulic motor (50) operating on hydraulic pressure supplied from an electric motor-driven variable-capacity hydraulic pump (51); and
heating the pressurized liquefied gas supplied from the reciprocating pump (20) and thereby generating a gas fuel, wherein
pressure of the gas fuel to be injected into the combustion chamber is regulated through operation of an engine inlet gas pressure-reducing valve (40) provided in the vicinity of an inlet of the combustion chamber, while gas fuel outlet pressure of a heating device (30) is maintained constant through regulation of rotational speed of the hydraulic motor (50),
in a low speed region where the pump load would otherwise be small, the opening degree of a flow regulating valve (25), which is provided in a recirculation line (23) arranged to branch off the pressurized liquefied gas flow from an upstream side of the heating device (30) into a suction drum (24), is increased to increase the recirculation flow through the recirculation line (23) to secure a total flow of the liquefied gas flow through the reciprocating pump (20) to maintain the rotational frequency of the hydraulic motor (50) within a rotational frequency region where the hydraulic motor (50) can be controlled, **and***,*
**if the hydraulic pump (51) is stopped, hydraulic oil is sucked up from an auxiliary oil reservoir tank (56) through a vacuum prevention line (63) into the hydraulic motor (50) to prevent the hydraulic motor (50) from creating vacuum inside thereof, *and***
***wherein, if the hydraulic system of one of the plurality of gas fuel supply systems should be damaged, the hydraulic pressure supplied from the hydraulic system of another one of the plurality of gas fuel supply systems is used.***

## Patentansprüche

1. Eine Gasbrennstoffzuführvorrichtung (10) zum Zuführen von Flüssiggas mit einem hohen Druck zum Einspritzen von Brennstoffgas in eine Verbrennungskammer eines Hochdruckgaseinspritz-Dieselmotors, wobei die Gasbrennstoffzuführvorrichtung (10) aufweist:
eine Vielzahl von Gasbrennstoffzuführsystemen, die jeweils aufweisen:
eine oszillierende Pumpe (20), die angeordnet ist, um durch einen Hydraulikmotor (50) angetrieben zu werden, um eingebrachtes Flüssiggas auf einen gewünschten Druck zu bringen und um das mit Druck beaufschlagte Flüssiggas auszutragen,
ein Hydrauliksystem mit einer Hydraulikpumpeneinheit (53), die angeordnet ist, um Antriebshydraulikdruck von einer durch einen Elektromotor angetriebenen Hydraulikpumpe mit variabler Kapazität (51) zu dem Hydraulikmotor (50) zuzuführen, und einer UnterdruckVerhinderungsleitung (63), die von einer Hydraulikdruckzuführleitung (52), welche die Hydraulikpumpeneinheit (53) und den Hydraulikmotor (50) verbindet, abzweigt, und die mit einem Hilfsölreservoirtank (56) verbunden ist, wobei die Unterdruckverhinderungsleitung (63) mit einem Rückschlagventil (64) zum Blockieren einer Hydraulikdruckströmung in einer Richtung von der Hydraulikdruckzuführleitung (52) zu dem Hilfsölreservoirtank (56) versehen ist, und
eine Heizvorrichtung (30), die angeordnet ist, um das mit Druck beaufschlagte Flüssiggas, das von der oszillierenden Pumpe (20) zugeführt wird, zu erwärmen und zu verdampfen,
ein Steuerteil (80), das angeordnet ist, um eine Rotationsgeschwindigkeit des Hydraulikmotors (50) unter Verwendung des Gasbrennstoffauslassdrucks (PV) der Heizvorrichtung (30) oder der Rotationsgeschwindigkeit des Hydraulikmotors (50) als ein Steuerobjekt zu regulieren,
ein Motoreinlassgasdruck-Minderungsventil (40), das angeordnet ist, um den Druck von Gasbrennstoff, der in die Verbrennungskammer einzuspritzen ist, zu regulieren, und
eine Zirkulationsleitung (23) mit einem Strömungsregulierventil (25), die angeordnet ist, um das Flüssiggas, das durch die oszillierende Pumpe (20) mit Druck beaufschlagt wurde, von einer stromaufwärtigen Seite der Heizvorrichtung (30) in eine Saugtrommel (24) abzuzweigen,
wobei das Steuerteil (80) angeordnet ist, um, in einem Bereich niedriger Geschwindigkeit, wo die Pumpenlast ansonsten klein wäre, den Öffnungsgrad des Strömungsregulierventils (25) zu erhöhen, um die Rezirkulationsströmung durch die Rezirkulationsleitung (23) zu erhöhen, um eine Gesamtströmung der Flüssiggasströmung durch die oszillierende Pumpe (20) sicherzustellen, um die Rotationsfrequenz des Hydraulikmotors (50) in einem Rotationsfrequenzbereich zu halten, wo der Hydraulikmotor (50) gesteuert werden kann, und
wobei Hydrauliksysteme der jeweiligen Gasbrennstoffzuführsysteme miteinander in einer austauschbaren Weise verbunden sind.

2. Die Gasbrennstoffzuführvorrichtung (10) gemäß Anspruch 1, wobei
das Steuerteil (80) angeordnet ist, um die Rotationsgeschwindigkeit des Hydraulikmotors (50) durch eine variable Kapazitätssteuerung der Hydraulikpumpe (51) so zu regulieren, dass der konstante Gasbrennstoffauslassdruck (PV) beibehalten ist.

3. Die Gasbrennstoffzuführvorrichtung (10) gemäß Anspruch 1 oder 2, wobei
das Motoreinlassgasdruck-Minderungsventil (40) mit einem Hochdruckmodus zum Einspritzen des Gasbrennstoffs in die Verbrennungskammer des Hochdruckgaseinspritz-Dieselmotors und mit einem Niederdruckmodus zum Zuführen des Gasbrennstoffs als einen Brennstoff für einen Ottomotor vom Gaszündkerzentyp ausgestattet ist.

4. Ein Hochdruckgaseinspritz-Dieselmotor, der angeordnet ist, um mit Gas als einem Brennstoff zu arbeiten, das erhalten ist durch Verdampfen von Flüssiggas, und der mit der Gasbrennstoffzuführvorrichtung (10) gemäß einem der Ansprüche 1 bis 3 ausgestattet ist.

5. Ein Flüssiggasbrennstoffzuführverfahren zum Zuführen von Flüssiggas unter einem hohen Druck zum Einspritzen eines Gasbrennstoffs in eine Verbrennungskammer eines Hochdruckgaseinspritz-Dieselmotors gemäß Anspruch 4, wobei das Flüssiggasbrennstoffzuführverfahren die folgenden Schritte aufweist:
Einbringen und mit Druck Beaufschlagen des Flüssiggases auf einen gewünschten Austragdruck durch eine oszillierende Pumpe (20), die durch einen Hydraulikmotor (50) angetrieben wird, der mit Hydraulikdruck arbeitet, der von einer durch einen Elektromotor angetriebenen Hydraulikpumpe mit variabler Kapazität (51) zugeführt wird, und
Erwärmen des mit Druck beaufschlagten Flüssiggases, das von der oszillierenden Pumpe (20) zugeführt wird, und dadurch Erzeugen eines Gasbrennstoffs, wobei
Druck des Gasbrennstoffs, der in die Verbrennungskammer einzuspritzen ist, durch einen Betrieb eines Motoreinlassgasdruck-Minderungsventils (40) reguliert wird, das in der Umgebung eines Einlasses der Vebrennungskammer vorgesehen ist, während Gasbrennstoffauslassdruck einer Heizvorrichtung (30) durch ein Regulieren der Rotationsgeschwindigkeit des Hydraulikmotors (50) konstant gehalten wird,
in einem Niedergeschwindigkeitsbereich, wo die Pumpenlast ansonsten klein wäre, der Öffnungsgrad eines Strömungsregulierventils (25), das in einer Rezirkulationsleitung (23) vorgesehen ist, welche angeordnet ist, um die mit Druck beaufschlagte Flüssiggasströmung von einer stromaufwärtigen Seite der Heizvorrichtung (30) in eine Saugtrommel (24) abzuzweigen, erhöht wird, um die Rezirkulationsströmung durch die Rezirkulationsleitung (23) zu erhöhen, um eine Gesamtströmung der Flüssiggasströmung durch die oszillierende Pumpe (20) sicherzustellen, um die Rotationsfrequenz des Hydraulikmotors (50) in einem Rotationsfrequenzbereich zu halten, wo der Hydraulikmotor (50) gesteuert werden kann, und
wenn die Hydraulikpumpe (51) gestoppt ist, Hydrauliköl von einem Hilfsölreservoirtank (56) durch eine Unterdruckverhinderungsleitung (63) in den Hydraulikmotor (50) angesaugt wird, um zu verhindern, dass der Hydraulikmotor (50) einen Unterdrucks im Inneren davon erzeugt, und
wobei, wenn das Hydrauliksystem von einem der Mehrzahl der Gasbrennstoffzuführsysteme beschädigt sein sollte, der Hydraulikdruck, der von dem Hydrauliksystem eines anderen der Mehrzahl der Gasbrennstoffzuführsysteme zugeführt wird, verwendet wird.

## Revendications

1. Dispositif (10) d'alimentation en carburant gazeux pour fournir du gaz liquéfié sous une pression haute, afin d'injecter du carburant gazeux dans une chambre de combustion d'un moteur diesel à injection de gaz à haute pression, le dispositif (10) d'alimentation en carburant gazeux comprenant :
une pluralité de systèmes d'alimentation en carburant gazeux comprenant chacun :
une pompe (20) à mouvement alternatif agencée pour être entraînée par un moteur (50) hydraulique, pour mettre à une pression souhaitée du gaz liquéfié introduit et pour refouler le gaz liquéfié mis sous pression;
un système hydraulique comprenant un groupe (53) hydraulique de pompage agencé pour fournir au moteur (50) hydraulique une pression hydraulique d'entraînement, à partir d'une pompe (51) hydraulique de capacité variable entraînée par un moteur électrique, et une ligne (63) de prévention du vide, qui bifurque d'une ligne (52) d'alimentation en pression hydraulique, reliant le groupe (53) hydraulique de pompage et le moteur (50) hydraulique, et qui est reliée à un réservoir (56) auxiliaire d'huile, la ligne (63) de prévention du vide étant pourvue d'un clapet (64) de retenue pour empêcher un courant sous pression hydraulique d'aller de la ligne (52) d'alimentation en une pression hydraulique au réservoir (56) auxiliaire d'huile et
un dispositif (30) de chauffage agencé pour chauffer et vaporiser le gaz liquéfié mis sous pression fourni par la pompe (20) à mouvement alternatif;
une partie (80) de commande agencée pour réguler une vitesse de rotation du moteur (50) hydraulique, on utilise la pression (PV) de sortie du carburant gazeux du dispositif (30) de chauffage ou la vitesse de rotation du moteur (50) hydraulique comme objectif à commander;
une soupape (40) de détente de la pression du gaz d'admission dans le moteur agencée pour réguler la pression du carburant gazeux à injecter dans la chambre de combustion et
une ligne (23) de recirculation comprenant une soupape (25) de régulation du débit disposée pour dériver le gaz liquéfié, qui a été mis sous pression par la pompe (20) à mouvement alternatif, d'un côté en amont du dispositif (30) de chauffage à un tambour (24) d'aspiration,
dans lequel la partie (80) de commande est agencée pour, dans une plage à petite vitesse où la charge de la pompe serait sinon petite, augmenter le degré d'ouverture de la soupape (25) de régulation du débit pour augmenter le courant de recirculation dans la ligne (23) de recirculation, afin d'assurer un courant total du gaz liquéfié dans la pompe (20) à mouvement alternatif, afin de maintenir la fréquence de rotation du moteur (50) hydraulique dans une plage de fréquence de rotation où le moteur (50) hydraulique peut être commandé et
dans lequel des systèmes hydrauliques des systèmes respectifs d'alimentation en carburant gazeux sont reliés les uns aux autres d'une manière interchangeable.

2. Dispositif (10) d'alimentation en carburant gazeux suivant la revendication 1,
dans lequel
la partie (80) de commande est agencée pour réguler la vitesse de rotation du moteur (50) hydraulique par une commande de capacité variable de la pompe (51) hydraulique, de manière à maintenir la pression (PV) constante de sortie du carburant gazeux.

3. Dispositif (10) d'alimentation en carburant gazeux suivant la revendication 1 ou 2, dans lequel
la soupape (40) de détente de la pression du gaz d'admission au moteur est équipée d'un mode à haute pression, pour injecter le carburant gazeux dans la chambre de combustion du moteur diesel à injection de gaz sous haute pression, et d'un mode à basse pression, pour fournir le combustible gazeux comme combustible, pour un moteur à gaz à cycle Beau de Rochas de type à allumage par étincelle.

4. Moteur diesel à injection de gaz sous haute pression agencé pour fonctionner sur du gaz comme carburant obtenu en vaporisant du gaz liquéfié, et équipé du dispositif (10) d'alimentation en carburant gazeux suivant l'une quelconque des revendications 1 à 3.

5. Procédé d'alimentation en carburant gazeux liquéfié, pour fournir du gaz liquéfié sous une pression haute, afin d'injecter un carburant gazeux dans une chambre de combustion d'un moteur diesel à injection de gaz sous haute pression, tel que défini à la revendication 4, le procédé d'alimentation en carburant gazeux liquéfié comprenant les stade de :
introduction et mise sous pression du gaz liquéfié, jusqu'à une pression de refoulement souhaitée, par une pompe (20) à mouvement alternatif, qui est entraînée par un moteur (50) hydraulique, fonctionnant sur une pression hydraulique fournie par une pompe (51) hydraulique de capacité variable, entraînée par un moteur électrique et
chauffage du gaz liquéfié mis sous pression fourni par la pompe (20) à mouvement alternatif et production ainsi d'un carburant gazeux,
dans lequel
on régule la pression du combustible gazeux à injecter dans la chambre de combustion, en faisant fonctionner une soupape (20) de détente de la pression du gaz d'admission au moteur, prévue à proximité d'une entrée de la chambre de combustion, tandis qu'une pression de sortie du carburant gazeux d'un dispositif (30) de chauffage est maintenue constante par régulation de la vitesse de rotation du moteur (50) hydraulique,
dans une plage de vitesse petite où la charge de la pompe serait sinon petite, on augmente le degré d'ouverture d'une soupape (25) de régulation du débit, qui est prévue dans une ligne (23) de recirculation, agencée pour dériver le courant de gaz liquéfié sous pression d'un côté en amont du dispositif (30) de chauffage, à un tambour (24) d'aspiration, pour augmenter le courant de recirculation dans la ligne (23) de recirculation, afin d'assurer un courant total du gaz liquéfié dans la pompe (20) à mouvement alternatif, pour maintenir la fréquence de rotation du moteur (50) hydraulique, dans une plage de fréquence de rotation où le moteur (50) hydraulique peut être commandé et
si la pompe (51) hydraulique est arrêtée, on aspire de l'huile hydraulique d'un réservoir (56) auxiliaire d'huile, par une ligne (63) de prévention du vide dans le moteur (50) hydraulique, pour empêcher le moteur (50) hydraulique de créer du vide à l'intérieur de celui-ci et
dans lequel, si le système hydraulique de l'un de la pluralité des systèmes d'alimentation en carburant gazeux devait être endommagé, on utilise la pression hydraulique fournie par le système hydraulique d'un autre de la pluralité des systèmes d'alimentation en carburant gazeux.
